# EUROPÄISCHE PATENTSCHRIFT

(11) **EP 3 024 776 B1**
(45) Veröffentlichungstag und Bekanntmachung des Hinweises auf die Patenterteilung: **22.05.2019**
(21) Anmeldenummer: 14738523.1
(22) Anmeldetag: 11.07.2014
(51) Int. Cl.: B67D 7/32, B67D 7/00, B67D 7/42

(54) **KUPPLUNGSELEMENT**
COUPLING ELEMENT
CONNECTEUR

(30) Priorität: 24.07.2013 EP 13177893
(43) Veröffentlichungstag der Anmeldung: 01.06.2016
(73) Patentinhaber: Elaflex Hiby Tanktechnik GmbH & Co. KG, 22525 Hamburg (DE)
(72) Erfinder: MEYER, Heinz, Ulrich, 22589 Hamburg (DE)
(74) Vertreter: Glawe, Delfs, Moll
(86) Internationale Anmeldenummer: PCT/EP2014/064964
(87) Internationale Veröffentlichungsnummer: WO 2015/010930

(56) Entgegenhaltungen:
- FR-A1- 2 638 731
- US-A- 4 791 961
- US-A- 4 800 913
- US-A- 5 209 262
- US-A- 5 570 719
- US-A1- 2013 125 989

## Beschreibung

Die Erfindung betrifft ein Kupplungselement zur Verbindung von zwei Teilen einer Flüssigkeitsleitung. Das Kupplungselement umfasst einen ersten Flüssigkeitsanschluss und einen zweiten Flüssigkeitsanschluss, wobei die beiden Längsachsen der Flüssigkeitsanschlüsse gegeneinander abgewinkelt sind. Der erste Flüssigkeitsanschluss ist zur Herstellung einer Schraubverbindung mit dem ersten Teil der Flüssigkeitsleitung ausgestaltet. Weiterhin umfasst das Kupplungselement eine Abreißkupplung.

Beim Betanken von Kraftfahrzeugen kann es vorkommen, dass nach Beendigung des Tankvorgangs die Zapfpistole nicht zurück in die Tanksäule gehängt wird, sondern im Einfüllstutzen des Fahrzeuges vergessen wird. Fährt das Fahrzeug dann los, sorgt eine in der Regel im Bereich des Anschlussendes der Zapfpistole vorgesehene Abreißkupplung dafür, dass die Zapfpistole sich definiert an dieser Stelle vom Zapfschlauch trennt und so Beschädigungen des Zapfschlauches oder der Zapfsäule verhindert werden. Eine solche Abreißkupplung ist beispielsweise aus EP 0 555 558 A1, US 5,570,719 oder auch aus US 5,209,262 bekannt.

Weiterhin ist es aus dem Stand der Technik bekannt, die Verbindung zwischen der Zapfpistole und dem Zapfschlauch abgewinkelt zu gestalten. Eine solche Anordnung zeigt z.B. das Kupplungselement der US 2013/0125989. Ein relativ zur Zapfpistole nach unten abgewinkelter Zapfschlauch führt dazu, dass das von der Gewichtskraft des Zapfschlauches verursachte Drehmoment, welches ein Benutzer mit der Kraft seiner Hand ausgleichen muss, verringert wird. Dies erhöht den Tragekomfort der Zapfpistole.

Es ist die Aufgabe der vorliegenden Erfindung, ein Kupplungselement der eingangs genannten Art vorzustellen, welches benutzerfreundlich ist und einen sicheren Betrieb gewährleistet.

Gelöst wird diese Aufgabe dadurch, dass eine Verdrehsicherung am ersten Flüssigkeitsanschluss des Kupplungselementes angeordnet ist, welche eine relative Verdrehung zwischen dem ersten Teil der Flüssigkeitsleitung und dem Kupplungselement erlaubt, wenn ein definiertes Drehmoment zwischen dem ersten Teil der Flüssigkeitsleitung und dem Kupplungselement auftritt.

Im Folgenden werden zunächst einige im Rahmen der Erfindung verwendete Begriffe erläutert.

Eine Flüssigkeitsleitung dient dem Transport von Flüssigkeiten. Die Erfindung eignet sich insbesondere für Flüssigkeitsleitungen im Bereich von Tankstellen, Raffinerie- oder Chemieanlagen, weiter bevorzugt für flexible Leitungen (Schläuche), die zum Abfüllen solcher Flüssigkeiten vorgesehen sind. Beim ersten Teil der Flüssigkeitsleitung kann es sich beispielsweise um eine Zapfpistole und beim zweiten Teil der Flüssigkeitsleitung um einen Zapfschlauch handeln.

Ein Flüssigkeitsanschluss ist ein Anschluss zur flüssigkeitsdichten Verbindung einer Flüssigkeitsleitung. Ein Flüssigkeitsanschluss hat eine Längsachse, welche durch die Achse definiert ist, in die das Anschlussende der Flüssigkeitsleitung gerichtet ist, die an den Flüssigkeitsanschluss angeschlossenen ist. Der Winkel zwischen den beiden Längsachsen der Flüssigkeitsanschlüsse kann im Bereich zwischen 0° und 180° liegen. Bevorzugt liegt der Winkel zwischen 20° und 70°, weiter bevorzugt im Bereich von 45°.

Eine Abreißkupplung ist eine im Betrieb flüssigkeitsdichte Kupplung, die durch das Aufbringen einer definierten Zugkraft und/oder eines definierten Kippmoments getrennt werden kann. Die Trennung geschieht bevorzugt zerstörungsfrei, sodass die Abreißkupplung nach einem Abriss erneut zusammengefügt und weiter verwendet werden kann.

Indem der erste Flüssigkeitsanschluss zur Herstellung einer Schraubverbindung mit dem ersten Teil der Flüssigkeitsleitung ausgestaltet ist, kann das Kupplungselement drehfest mit dem ersten Teil der Flüssigkeitsleitung verschraubt werden, so dass zunächst eine relative Verdrehung verhindert wird. Eine Verhinderung einer relativen Verdrehung ist oftmals erwünscht, um die Bedienbarkeit zu erhöhen. Die Schraubverbindung kann beispielsweise über ein Gewinde und ein korrespondierendes Gegengewinde hergestellt werden. Dabei kann das Gewinde bzw. das Gegengewinde einen undefinierten Gewindeanschnitt aufweisen. Auf diese Weise kann das Kupplungselement relativ zum ersten Teil der Flüssigkeitsleitung in einer beliebigen Winkelstellung um die Achse des ersten Flüssigkeitsanschlusses herum gedreht werden, und dann in dieser beliebigen Winkeleinstellung fixiert werden. Ein Anzugdrehmoments zur Fixierung bzw. zur Lösung der Schraubverbindung kann zwischen 5 Nm und 200 Nm, bevorzugt zwischen 10 Nm und 50 Nm liegen.

Die erfindungsgemäße Verdrehsicherung erlaubt nun eine Verdrehung, wenn ein definiertes Drehmoment zwischen dem ersten Teil der Flüssigkeitsleitung und dem Kupplungselement wirkt. Ein Drehmoment zwischen dem ersten Teil der Flüssigkeitsleitung und dem Kupplungselement wirkt beispielsweise dann, wenn der erste Teil der Flüssigkeitsleitung fixiert ist und das Kupplungselement um die Längsachse des ersten Flüssigkeitsanschlusses gedreht wird. Ebenso wirkt ein solches Drehmoment, wenn das Kupplungselement fixiert ist und der erste Teil der Flüssigkeitsleitung um seine Längsachse gedreht wird, oder wenn auf andere Art eine relative Drehung zwischen dem ersten Teil der Flüssigkeitsleitung und dem Kupplungselement um die oben genannte Achse stattfindet. Sofern das Drehmoment kleiner ist, als das definierte Drehmoment, verhindert die Verdrehsicherung eine Verdrehung. Erst wenn das Drehmoment ein definiertes Drehmoment erreicht, erlaubt die Verdrehsicherung eine Verdrehung.

Die Erfindung hat erkannt, dass bei abgewinkelten Kupplungselementen aus dem Stand der Technik Probleme auftreten können, und zwar beispielsweise dann, wenn eine Zapfpistole im Tankstutzen eines Fahrzeuges vergessen wird und das Fahrzeug dann losfährt. Bei modernen Zapfsäulen tritt der Zapfschlauch an einer Stelle unterhalb des Aufhängepunktes der Zapfpistole in der Zapfsäule und unterhalb der üblichen Höhe des Einfüllstutzens eines Fahrzeuges aus der Zapfsäule heraus. Wird die Zapfpistole in den Einfüllstutzen des Fahrzeugs eingesteckt, so ermöglicht das abgewinkelte Kupplungselement eine geradlinige Führung des Zapfschlauches von der Zapfpistole bis zum Austrittspunkt des Zapfschlauches aus der Zapfsäule. Aufgrund des Winkels zwischen der Zapfpistole und dem Zapfschlauch ist aber die Kraftübertragung auf die Abreißkupplung nicht optimal, falls das Fahrzeug dann mit eingesteckter Zapfpistole losfährt. Die Zapfpistole kann sich im Einfüllstutzen verkanten, so dass keine Drehung der Zapfpistole möglich ist. Dann ist eine definierte Trennung an der Abreißkupplung nicht unter allen Umständen gewährleistet. Die erfindungsgemäße Verdrehsicherung stellt sicher, dass bei einem definierten Drehmoment eine Drehung zwischen der Zapfpistole und dem Kupplungselement stattfindet, so dass sich eine definierte Ausrichtung zwischen dem Zapfschlauch und der Zapfpistole einstellt. Aufgrund dieser definierten Ausrichtung ist ein ordnungsgemäßes Auslösen der Abreißsicherung durch eine definierte axiale Zugkraft und/oder ein definiertes Kippmoment gewährleistet.

An der Verbindung zwischen der Zapfpistole und dem Kupplungselement kann ein großes Drehmoment auftreten, da der Zapfschlauch einen langen Hebelarm darstellt, welcher beim Losfahren des Fahrzeuges eine große Kraft auf das Kupplungselement ausübt. Diese Kraft kann unter anderem zu einer Drehung des Kupplungselementes um die durch den ersten Flüssigkeitsanschluss definierte Achse und zu einem Lösen der Verschraubung zwischen dem Kupplungselement und der verkanteten Zapfpistole führen. Die vorliegende Erfindung bietet in diesem Zusammenhang den weiteren Vorteil, dass die erfindungsgemäße Verdrehsicherung ein Lösen der Schraubverbindung zwischen dem ersten Teil der Flüssigkeitsleitung und dem Kupplungselement verhindert, sofern das definierte Drehmoment zwischen dem ersten Teil der Flüssigkeitsleitung und dem Kupplungselement überschritten wird.

In einer bevorzugten Ausführungsform ist das Drehmoment, bei dem die Verdrehsicherung eine relative Verdrehung zwischen dem ersten Teil der Flüssigkeitsleitung und dem Kupplungselement erlaubt, kleiner als das zum Lösen der Verschraubung zwischen dem Kupplungselement und dem ersten Teil der Flüssigkeitsleitung notwendige Drehmoment. Dies stellt sicher, dass eine Drehung stattfindet, bevor sich die Verschraubung zwischen dem Kupplungselement und dem ersten Teil der Flüssigkeitsleitung lösen kann. Das Drehmoment bei dem die Verdrehsicherung eine relative Verdrehung erlaubt ist vorzugsweise zwischen 10 Nm und 40 Nm, weiter vorzugsweise zwischen 20 Nm und 30 Nm. Diese Wahl ist vorteilhaft, da das zum Lösen der Verschraubung erforderliche Drehmoment üblicherweise zwischen 40 Nm und 50 Nm liegt.

Die vorliegende Erfindung erweist sich als besonders vorteilhaft, wenn der erste Teil der Flüssigkeitsleitung als Zapfpistole und der zweite Teil der Flüssigkeitsleitung als Zapfschlauch ausgestaltet ist. Vorzugsweise ist weiterhin die Abreißkupplung am zweiten Flüssigkeitsanschluss des Kupplungselementes angeordnet.

Die erfindungsgemäße Verdrehsicherung kann zwei Permanentmagnete umfassen. Diese sind vorzugsweise so angeordnet, dass der Pol des einen Permanentmagneten mit dem Gegenpol des anderen Permanentmagneten zusammenwirkt. Weiter vorzugsweise ist die Verdrehsicherung so ausgestaltet, dass sich bei Wirken eines definierten Drehmomentes zwischen dem ersten Teil der Flüssigkeitsleitung und dem Kupplungselement der eine Pol des einen Permanentmagneten vom Gegenpol des anderen Permanentmagneten löst.

In einer bevorzugten Ausführungsform umfasst die Verdrehsicherung einen Sicherungsstift. Dieser kann in eine zum Sicherungsstift korrespondierende Vertiefung eingreifen. Vorzugsweise löst sich bei Wirken eines definierten Drehmomentes zwischen dem ersten Teil der Flüssigkeitsleitung und dem Kupplungselement der Sicherungsstift aus der Vertiefung. Es kann dazu vorgesehen sein, dass der Sicherungsstift bei Wirken eines definierten Drehmomentes bricht. Nachdem der Sicherungsstift gebrochen ist, kann der erste Teil der Flüssigkeitsleitung relativ zum Kupplungselement frei verdreht werden.

In einer bevorzugten Ausführungsform ist aber vorgesehen, dass der Sicherungsstift mit Hilfe eines Rückstellelementes in die Vertiefung gedrückt wird. Das Rückstellelement kann beispielsweise eine Feder sein. Weiter vorzugsweise rastet der Sicherungsstift bei Wirken eines definierten Drehmomentes zwischen dem ersten Teil der Flüssigkeitsleitung und dem Kupplungselement über eine Schrägfläche aus der Vertiefung aus. Bei Wirken eines kleinen Drehmomentes drückt der Sicherungsstift somit seitlich gegen die Schrägfläche und wird von dieser blockiert. Dabei wird zwar ein Teil des Drehmomentes in eine Kraft umgewandelt, die der Federkraft entgegenwirkt. Aber erst wenn das definierte Drehmoment wirkt, ist diese Kraft groß genug um die Federkraft zu überwinden. In diesem Fall wird der Sicherungsstift in Richtung der Feder bewegt, so dass der Sicherungsstift nicht mehr von der Schrägfläche blockiert wird. In diesem Fall ist eine Verdrehung möglich. Eine Verdrehsicherung dieser Art hat den Vorteil, dass die Verdrehsicherung durch eine Verdrehung nicht zerstört wird und wieder zurück in die ursprüngliche Stellung gebracht werden kann, bei der der Sicherungsstift in die Vertiefung eingreift. Vorzugsweise sind von der Mittelposition der Vertiefung aus gesehen zwei sich in Umfangsrichtung erhebende Schrägflächen vorgesehen. In diesem Fall wirkt die Verdrehsicherung in beide Verdrehrichtungen.

Bevorzugt umfasst die Verdrehsicherung weiterhin ein Ringelement mit einer Mehrzahl von kreisförmig angeordneten Vertiefungen. Es kann eine der Vertiefungen ausgewählt werden, mit welcher der Sicherungsstift in Eingriff gebracht wird. Dadurch wird eine Winkelposition zwischen dem ersten Teil der Flüssigkeitsleitung und dem Kupplungselement eingestellt, in der der ersten Teil der Flüssigkeitsleitung und das Kupplungselement relativ zueinander gesichert sind. Aufgrund des kreisförmigen Ringelements kann aus einer Mehrzahl von solchen Winkelpositionen ausgewählt werden.

Das erfindungsgemäße Kupplungselement ist besonders vorteilhaft bei modernen Zapfsäulen, bei denen der Zapfschlauch an einer Stelle unterhalb des Aufhängepunktes der Zapfpistole in der Zapfsäule und unterhalb der üblichen Höhe des Einfüllstutzens eines Fahrzeuges aus der Zapfsäule heraustritt. Hier muss die Zapfpistole beim Vorgang des Herausnehmens aus der Halterung in der Zapfsäule und des Einsteckens in den Einfüllstutzen des Fahrzeuges um eine im Wesentlichen vertikale Achse um 180° gedreht werden. Es kann dazu vorgesehen sein, dass am zweiten Flüssigkeitsanschluss des Kupplungselementes eine freie Verdrehung zwischen dem Kupplungselement und dem zweiten Teil der Flüssigkeitsleitung möglich ist.

Das erfindungsgemäße Kupplungselement kann aber auch an anderen Arten von Zapfsäulen verwendet werden, bei denen der Zapfschlauch beispielsweise an der Seite der Zapfsäule auf einer Höhe oberhalb der üblichen Höhe eines Einfüllstutzens aus der Zapfsäule heraustritt. Hier kann es vorgesehen sein, dass die Verdrehsicherung abschaltbar ist und dass im abgeschalteten Zustand eine freie relative Verdrehung zwischen dem Kupplungselement und dem ersten Teil der Flüssigkeitsleitung möglich ist. Die auf diese Weise erreichbare zusätzliche leichte Verdrehbarkeit ermöglicht bei solchen Zapfsäulen ein bequemeres Einstecken der Zapfpistole in den Einfüllstutzen.

Gegenstand der vorliegenden Erfindung ist ferner eine Zapfpistole, welche ein Kupplungselement gemäß der Erfindung umfasst. Das erfindungsgemäße Kupplungselement kann in Verbindung mit Zapfpistolen verwendet werden, in denen in koaxialer Bauweise Rückführkanäle beispielsweise für das Zurückführen von Dämpfen von Ottokraftstoffen ausgebildet sind. Das erfindungsgemäße Kopplungselement kann auch in Verbindung mit Zapfpistolen für Dieselkraftstoffe verwendet werden, in denen keine Rückführungskanäle für Kraftstoffdämpfe vorhanden sind.

Ein weiterer Gegenstand der Erfindung ist eine Zapfsäule, welche eine Zapfpistole mit erfindungsgemäßem Kupplungselement aufweist.

Die Erfindung wird im Folgenden anhand einer vorteilhaften Ausführungsform unter Bezugnahme auf die beigefügten Zeichnungen beschrieben. Es zeigen:
- Fig. 1.: eine Zapfpistole mit einem erfindungsgemäßen Kupplungselement;
- Fig. 2.: eine seitliche Schnittdarstellung durch eine erste Ausführungsform eines erfindungsgemäßen Kupplungselementes;
- Fig. 3.: eine seitliche Schnittdarstellung durch eine zweite Ausführungsform eines erfindungsgemäßen Kupplungselementes;
- Fig. 4.: eine Schnittdarstellung in Umfangsrichtung durch einen Sicherungsstift einer dritten erfindungsgemäßen Ausführungsform des Kupplungselementes, wobei der Sicherungsstift in eine Vertiefung eingreift;
- Fig. 5.: eine Schnittdarstellung in Umfangsrichtung durch einen Sicherungsstift einer dritten erfindungsgemäßen Ausführungsform des Kupplungselementes, wobei der Sicherungsstift aus der Vertiefung ausgerastet ist;
- Fig. 6.: eine Schnittdarstellung in Umfangsrichtung durch ein Sicherungselement einer vierten erfindungsgemäßen Ausführungsform des Kupplungselementes, welches zwei Permanentmagnete umfasst;
- Fig. 7.: eine seitliche Schnittdarstellung des Verbindungsbereiches zwischen einem erfindungsgemäßen Kupplungselement und einer Zapfpistole in unverbundenem Zustand.

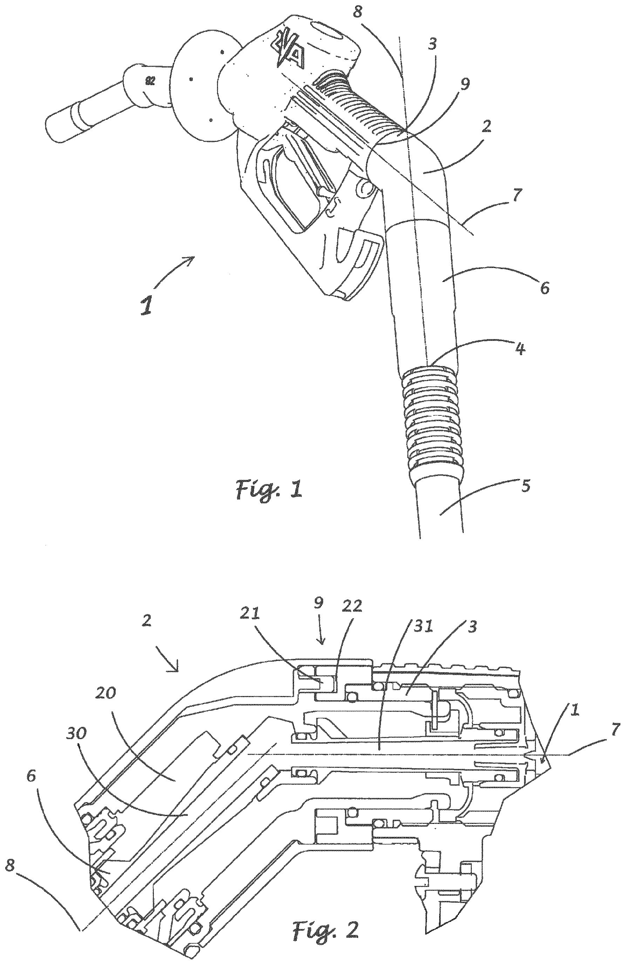

Figur 1 zeigt eine Zapfpistole 1 zur Betankung eines Kraftfahrzeuges mit einem erfindungsgemäßen Kupplungselement 2. Das Kupplungselement 2 verbindet eine Zapfpistole 1 mit einem Zapfschlauch 5, welcher weiter zu einer nicht gezeigten Zapfsäule führt. Dabei dient ein erster Flüssigkeitsanschluss 3 zur Verbindung mit der Zapfpistole 1 und ein zweiter Flüssigkeitsanschluss 4 zur Verbindung mit dem Zapfschlauch 5. Am zweiten Flüssigkeitsanschluss 4 befindet sich eine Abreißkupplung 6. Die durch den ersten Flüssigkeitsanschluss 3 definierte Längsachse 7 schließt mit der durch den zweiten Flüssigkeitsanschluss 4 definierten Längsachse 8 einen Winkel von ca. 45° ein. In anderen Ausführungsformen kann dieser Winkel zwischen 0° und 180° liegen. Während der Schlauch 5 um die Längsachse 8 relativ zum Kupplungselement 2 frei verdrehbar ist, ist die Zapfpistole 1 über eine nicht gezeigte Schraubverbindung relativ zum Kupplungselement 2 fixiert. Allerdings befindet sich eine Verdrehsicherung 9 am ersten Flüssigkeitsanschluss 3, welche eine relative Verdrehung zwischen dem Kupplungselement 2 und der Zapfpistole um die Längsachse 7 nur dann erlaubt, wenn ein definiertes Drehmoment zwischen dem Kupplungselement 2 und der Zapfpistole 1 wirkt.

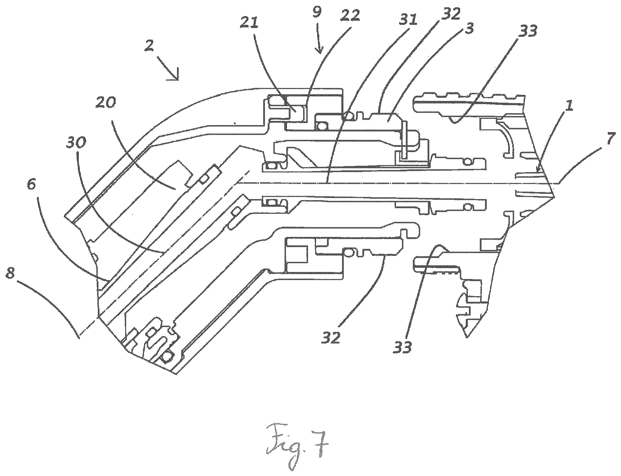

Figur 2 zeigt eine seitliche Schnittdarstellung einer ersten Ausführungsform des erfindungsgemäßen Kupplungselementes 2. Dabei ist die Abreißkupplung 6 nur teilweise dargestellt, außerdem ist auch ein Teil der Zapfpistole 1 gezeigt. Die Zapfpistole 1 ist mit dem Kupplungselement 2 verschraubt. Figur 7 zeigt die Zapfpistole 1 und das Kupplungselement 2 in einem unverbundenen Zustand, in dem die Schraubverbindung erkennbar ist. Die Schraubverbindung besteht aus einem am Kupplungselement 2 angeordneten Gewinde 32 sowie aus einem an der Zapfpistole 1 angeordneten Gegengewinde 33. In der Schnittdarstellung der Figur 2 ist erkennbar, wie die Flüssigkeitsanschlüsse 3 und 4 über einen Kanal 20 innerhalb des Kupplungselementes miteinander verbunden sind. Es sind außerdem Rückführkanäle 30, 31 ausgebildet, in denen beispielsweise Kraftstoffdämpfe zurückgeführt werden können.

Figur 2 zeigt weiterhin die Verdrehsicherung 9, welche in der Nähe des Flüssigkeitsanschlusses 3 angeordnet ist. Innerhalb der Verdrehsicherung 9 greift ein Sicherungsstift 21 in eine korrespondierende Vertiefung 22 ein. Bei einer Drehung der Zapfpistole 1 relativ zum Kupplungselement 2 um die Achse 7 stößt der in die Vertiefung 22 eingreifende Teil des Sicherungsstiftes 21 in Umfangsrichtung gegen eine der Seitenflächen der Vertiefung 22 und verhindert somit eine relative Verdrehung der Tankpistole 1 gegenüber dem Kupplungselement 2. Sofern das wirkende Drehmoment einen Wert von 30 Nm erreicht, bricht der Sicherungsstift 21, so dass eine Verdrehung stattfinden kann.

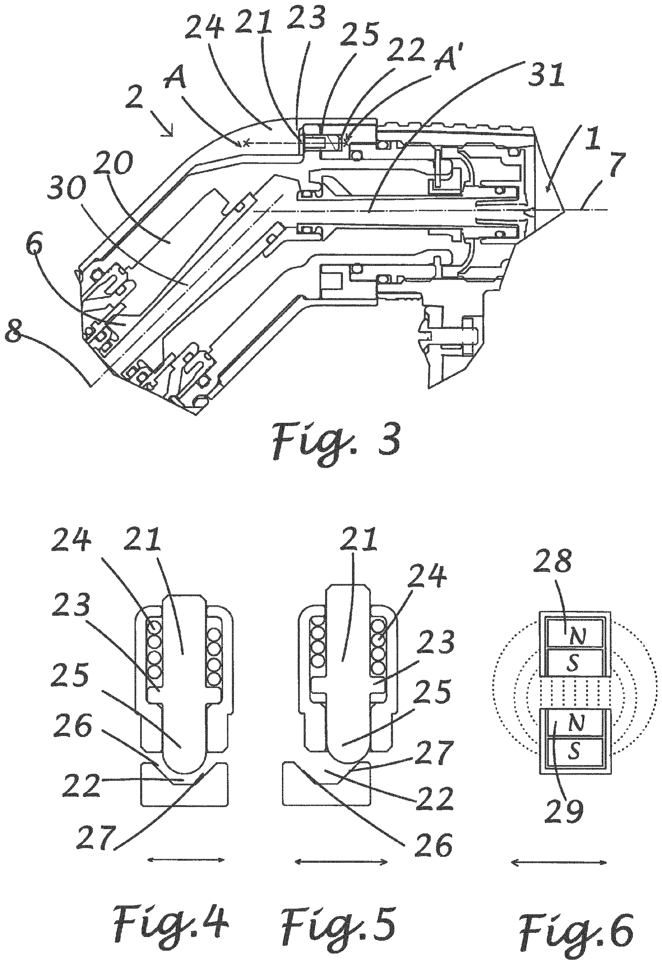

Figur 3 zeigt eine weitere Ausführungsform eines erfindungsgemäßen Kupplungselementes. Im Unterschied zu der in Figur 2 gezeigten Ausführungsform weist der Sicherungsstift 21 einen umlaufenden Vorsprung 23 auf, an welchem eine Feder 24 befestigt ist. Die Feder 24 drückt den Sicherungsstift 21 in die Vertiefung 22 hinein. Bei Wirken eines Drehmomentes zwischen der Tankpistole 1 und dem Kupplungselement 2 drückt der in die Vertiefung eingreifende Teil 25 des Sicherungsstifts 21 in Umfangsrichtung gegen eine der Seitenflächen der Vertiefung 22. Dadurch wird eine relative Verdrehung verhindert. Sofern das wirkende Drehmoment einen Wert von 30 Nm erreicht, geleitet der Sicherungsstift 21 gegen die Federkraft der Feder 24 über die Kante der Vertiefung 22, so dass eine Verdrehung stattfinden kann. Dies wird im Folgenden noch genauer erläutert.

In der Figur 4 ist eine detaillierte Schnittansicht entlang der in Figur 3 gezeigten Linie AA' gezeigt, wobei der Schnitt in Umfangsrichtung, also in die Zeichenebene hinein zeigt. In der Figur 4 ist die Umfangsrichtung durch den Doppelpfeil angedeutet. Der Sicherungsstift 21 greift in die Vertiefung 22 ein. In dieser Ansicht ist zu sehen, dass die Vertiefung 22 zwei Schrägflächen 26, 27 aufweist, welche sich von der Mitte der Vertiefung 22 aus gesehen in Umfangsrichtung zur Feder 24 hin erheben. Der Sicherungsstift 21 ist an seinem in die Vertiefung 22 eingreifenden Teil 25 so geformt, dass er bündig mit den Schrägflächen abschließt. Zur besseren Illustration ist in der Figur 4 allerdings ein Spalt zwischen dem Teil 25 des Sicherungsstifts und den Schrägflächen 26, 27 vorhanden. Die Federkraft drückt den Sicherungsstift 21 in die Vertiefung 22 hinein. Bei Wirken eines Drehmomentes von 30 Nm in Umfangsrichtung drückt der Sicherungsstift 21 je nach Drehrichtung gegen die Schrägfläche 26 oder 27. Die von der Schrägfläche verursachte Gegenkraft wirkt normal zur Schrägfläche, so dass eine Komponente der Gegenkraft entgegen der Drehrichtung wirkt und so eine Drehung verhindert. Die andere Komponente der Gegenkraft wirkt in Figur 4 nach oben, also der Federkraft entgegen. Sofern das definierte Drehmoment wirkt, ist die nach oben gerichtete Komponente so groß, dass sie die Federkraft übersteigt und die Feder 24 zusammengedrückt wird. Dadurch wird der Sicherungsstift 21 nach oben aus der Vertiefung heraus bewegt und eine relative Verdrehung kann stattfinden. Dieser Zustand ist in Figur 5 gezeigt.

In einer weiteren Ausführungsform des erfindungsgemäßen Kupplungselementes sind anstelle des Sicherungsstiftes 21 zwei Permanentmagnete 28, 29 vorhanden, wobei der Südpol des Permanentmagneten 28, dem Nordpol des Permanentmagneten 29 gegenübersteht. Dies ist in Figur 6 gezeigt. Aufgrund der magnetischen Anziehungskraft zwischen Nord- und Südpol ist eine relative Verdrehung in Umfangsrichtung (durch den Doppelpfeil angedeutet) zwischen der Tankpistole 1 und dem Kupplungselement 2 nicht möglich. Erst bei Wirken eines definierten Drehmomentes wird die Anziehungskraft der Permanentmagnete 28, 29 überwunden, so dass diese voneinander gelöst werden und eine weitere Verdrehung möglich wird.

## Patentansprüche

1. Kupplungselement (2) umfassend einen ersten Flüssigkeitsanschluss (3) zur Verbindung mit einem ersten Teil (1) einer Flüssigkeitsleitung, einen zweiten Flüssigkeitsanschluss (4) zur Verbindung mit einem zweiten Teil (5) der Flüssigkeitsleitung und eine Abreißkupplung (6), wobei die beiden Längsachsen (7, 8) der Flüssigkeitsanschlüsse (3, 4) gegeneinander abgewinkelt sind und wobei der erste Flüssigkeitsanschluss (3) zur Herstellung einer Schraubverbindung mit dem ersten Teil (1) der Flüssigkeitsleitung ausgestaltet ist, **dadurch gekennzeichnet, dass** eine Verdrehsicherung (9) am ersten Flüssigkeitsanschluss (3) des Kupplungselementes (2) vorgesehen ist, welche eine relative Verdrehung zwischen dem ersten Teil (1) der Flüssigkeitsleitung und dem Kupplungselement (2) erlaubt, wenn ein definiertes Drehmoment zwischen dem ersten Teil (1) der Flüssigkeitsleitung und dem Kupplungselement (2) wirkt.

2. Kupplungselement nach Anspruch 1, **dadurch gekennzeichnet, dass** die Verdrehsicherung (9) eine relative Verdrehung zwischen dem ersten Teil (1) der Flüssigkeitsleitung und dem Kupplungselement (2) erlaubt, wenn ein Drehmoment wirkt, das kleiner ist als das zum Lösen einer Verschraubung zwischen der Verdrehsicherung (9) und dem ersten Teil (1) der Flüssigkeitsleitung notwendige Drehmoment.

3. Kupplungselement nach Anspruch 2, **dadurch gekennzeichnet, dass** die Verdrehsicherung (9) eine relative Verdrehung zwischen dem ersten Teil (1) der Flüssigkeitsleitung und dem Kupplungselement (2) erlaubt, wenn ein Drehmoment wirkt, welches zwischen 10 Nm und 40 Nm, vorzugsweise zwischen 20 Nm und 30 Nm liegt.

4. Kupplungselement nach einem der vorhergehenden Ansprüche, **dadurch gekennzeichnet, dass** der erste Teil (1) der Flüssigkeitsleitung als Zapfpistole und der zweite Teil (5) der Flüssigkeitsleitung als Zapfschlauch ausgestaltet ist.

5. Kupplungselement nach Anspruch 4, **dadurch gekennzeichnet, dass** die Abreißkupplung (6) am zweiten Flüssigkeitsanschluss (4) des Kupplungselements (2) angeordnet ist.

6. Kupplungselement nach einem der vorhergehenden Ansprüche, **dadurch gekennzeichnet, dass** die Verdrehsicherung (9) zwei Permanentmagnete (28, 29) umfasst.

7. Kupplungselement nach Anspruch 6, **dadurch gekennzeichnet, dass** sich bei Wirken eines definierten Drehmomentes zwischen dem ersten Teil (1) der Flüssigkeitsleitung und dem Kupplungselement (2) der eine Pol des einen Permanentmagneten vom Gegenpol des anderen Permanentmagneten löst.

8. Kupplungselement nach einem der Ansprüche 1 bis 5,
**dadurch gekennzeichnet, dass** die Verdrehsicherung (9) einen Sicherungsstift (21) umfasst.

9. Kupplungselement nach Anspruch 8, **dadurch gekennzeichnet, dass** der Sicherungsstift (21) in eine zum Sicherungsstift (21) korrespondierende Vertiefung (22) eingreift und dass sich der Sicherungsstift (21) bei Wirken eines definierten Drehmomentes zwischen dem ersten Teil (1) der Flüssigkeitsleitung und dem Kupplungselement (2) aus der Vertiefung (22) löst.

10. Kupplungselement nach Anspruch 9, **dadurch gekennzeichnet, dass** der Sicherungsstift (21) bei Wirken eines definierten Drehmomentes zwischen dem ersten Teil (1) der Flüssigkeitsleitung und dem Kupplungselement (2) bricht.

11. Kupplungselement nach Anspruch 9, **dadurch gekennzeichnet, dass** der Sicherungsstift (21) mit Hilfe eines Rückstellelementes (24) in die Vertiefung (22) gedrückt wird und bei Wirken eines definierten Drehmomentes zwischen dem ersten Teil (1) der Flüssigkeitsleitung und dem Kupplungselement (2) über eine Schrägfläche (26) aus der Vertiefung (22) ausgerastet wird.

12. Kupplungselement nach einem der vorhergehenden Ansprüche, **dadurch gekennzeichnet, dass** am zweiten Flüssigkeitsanschluss (4) des Kupplungselementes eine freie Verdrehung zwischen dem Kupplungselement (2) und dem zweiten Teil (5) der Flüssigkeitsleitung möglich ist.

13. Kupplungselement nach einem der vorhergehenden Ansprüche, **dadurch gekennzeichnet, dass** die Verdrehsicherung (9) abschaltbar ist und dass im abgeschalteten Zustand eine freie relative Verdrehung zwischen dem Kupplungselement (2) und dem ersten Teil (1) der Flüssigkeitsleitung möglich ist.

14. Zapfpistole, **dadurch gekennzeichnet, dass** sie ein Kupplungselement nach einem der Ansprüche 1 bis 13 aufweist, wobei zwischen der Zapfpistole und dem ersten Flüssigkeitsanschluss (3) des Kupplungselementes (2) eine Schraubverbindung besteht.

15. Zapfsäule, **dadurch gekennzeichnet, dass** sie eine Zapfpistole nach Anspruch 14 aufweist.

## Claims

1. Coupling element (2) comprising a first liquid connector (3) for connection to a first part (1) of a liquid line, a second liquid connector (4) for connection to a second part (5) of a liquid line, and a tear-off coupling (6), wherein the two longitudinal axes (7, 8) of the liquid connectors (3, 4) are angled relative to one another, and wherein the first liquid connector (3) is designed to produce a screw connection to the first part (1) of the liquid line, **characterized in that** an anti-twist means (9) is provided on the first liquid connector (3) of the coupling element (2) and allows a relative rotation between the first part (1) of the liquid line and the coupling element (2) when a defined torque acts between the first part (1) of the liquid line and the coupling element (2).

2. Coupling element according to Claim 1, **characterized in that** the anti-twist means (9) allows a relative rotation between the first part (1) of the liquid line and the coupling element (2) when a torque is effective that is smaller than the torque necessary to release a screw connection between the anti-twist means (9) and the first part (1) of the liquid line.

3. Coupling element according to Claim 2, **characterized in that** the anti-twist means (9) allows a relative rotation between the first part (1) of the liquid line and the coupling element (2) when a torque is effective that lies between 10 Nm and 40 Nm, preferably between 20 Nm and 30 Nm.

4. Coupling element according to one of the preceding claims, **characterized in that** the first part (1) of the liquid line is designed as a pump nozzle and the second part (5) of the liquid line is designed as a pump hose.

5. Coupling element according to Claim 4, **characterized in that** the tear-off coupling (6) is arranged on the second liquid connector (4) of the coupling element (2).

6. Coupling element according to one of the preceding claims, **characterized in that** the anti-twist means (9) comprises two permanent magnets (28, 29).

7. Coupling element according to Claim 6, **characterized in that** one pole of one permanent magnet releases from the antipole of the other permanent magnet under the action of a defined torque between the first part (1) of the liquid line and a coupling element (2).

8. Coupling element according to one of Claims 1 to 5, **characterized in that** the anti-twist means (9) comprises a securing pin (21).

9. Coupling element according to Claim 8, **characterized in that** the securing pin (21) engages with an indentation (22) corresponding to the securing pin (21), and **in that** the securing pin (21) releases from the indentation (22) under the action of a defined torque between the first part (1) of the liquid line and the coupling element (2).

10. Coupling element according to Claim 9, **characterized in that** the securing pin (21) breaks under the action of a defined torque between the first part (1) of the liquid line and the coupling element (2).

11. Coupling element according to Claim 9, **characterized in that** the securing pin (21) is pressed with the aid of a restoring element (24) into the indentation (22) and is unlatched from the indentation (22) via an inclined surface (26) under the action of a defined torque between the first part (1) of the liquid line and the coupling element (2).

12. Coupling element according to one of the preceding claims, **characterized in that** a free rotation between the coupling element (2) and the second part (5) of the liquid line is possible at the second liquid connector (4) of the coupling element.

13. Coupling element according to one of the preceding claims, **characterized in that** the anti-twist means (9) can be switched off, and **in that** in the switched-off state a free relative rotation between the coupling element (2) and the first part (1) of the liquid line is possible.

14. Pump nozzle, **characterized in that** it has a coupling element according to one of Claims 1 to 13, wherein a screw connection exists between the pump nozzle and the first liquid connector (3) of the coupling element (2).

15. Filling pump, **characterized in that** it has a pump nozzle according to Claim 14.

## Revendications

1. Élément d'accouplement (2) comprenant un premier raccord de liquide (3) pour la connexion à une première partie (1) d'une conduite de liquide, un deuxième raccord de liquide (4) pour la connexion à une deuxième partie (5) de la conduite de liquide et un raccord cassant (6), les deux axes longitudinaux (7, 8) des raccords de liquide (3, 4) étant coudés l'un par rapport à l'autre et le premier raccord de liquide (3) étant configuré pour établir une connexion vissée avec la première partie (1) de la conduite de liquide, **caractérisé en ce qu'**une fixation antirotation (9) est prévue au niveau du premier raccord de liquide (3) de l'élément d'accouplement (2), laquelle permet une rotation relative entre la première partie (1) de la conduite de liquide et l'élément d'accouplement (2) lorsqu'un couple défini agit entre la première partie (1) de la conduite de liquide et l'élément d'accouplement (2).

2. Élément d'accouplement selon la revendication 1, **caractérisé en ce que** la fixation antirotation (9) permet une rotation relative entre la première partie (1) de la conduite de liquide et l'élément d'accouplement (2) lorsqu'un couple est exercé, lequel est inférieur au couple nécessaire pour desserrer un vissage entre la fixation antirotation (9) et la première partie (1) de la conduite de liquide.

3. Élément d'accouplement selon la revendication 2, **caractérisé en ce que** la fixation antirotation (9) permet une rotation relative entre la première partie (1) de la conduite de liquide et l'élément d'accouplement (2) lorsqu'un couple s'exerce, lequel est situé entre 10 Nm et 40 Nm, de préférence entre 20 Nm et 30 Nm.

4. Élément d'accouplement selon l'une quelconque des revendications précédentes, **caractérisé en ce que** la première partie (1) de la conduite de liquide réalisée sous forme de pistolet de remplissage et la deuxième partie (5) de la conduite de liquide est réalisée sous forme de tuyau de distribution.

5. Élément d'accouplement selon la revendication 4, **caractérisé en ce que** le raccord cassant (6) est disposé au niveau du deuxième raccord de liquide (4) de l'élément d'accouplement (2).

6. Élément d'accouplement selon l'une quelconque des revendications précédentes, **caractérisé en ce que** la fixation antirotation (9) comprend deux aimants permanents (28, 29).

7. Élément d'accouplement selon la revendication 6, **caractérisé en ce que** lors de l'application d'un couple défini entre la première partie (1) de la conduite de liquide et l'élément d'accouplement (2), l'un des pôles d'un des aimants permanents se détache du pôle opposé de l'autre aimant permanent.

8. Élément d'accouplement selon l'une quelconque des revendications 1 à 5, **caractérisé en ce que** la fixation antirotation (9) comprend une goupille de fixation (21).

9. Élément d'accouplement selon la revendication 8, **caractérisé en ce que** la goupille de fixation (21) s'engage dans un renfoncement (22) correspondant à la goupille de fixation (21) et **en ce que** la goupille de fixation (21), lorsqu'un couple défini s'exerce entre la première partie (1) de la conduite de liquide et l'élément d'accouplement (2), se détache du renfoncement (22).

10. Élément d'accouplement selon la revendication 9, **caractérisé en ce que** la goupille de fixation (21) se rompt lorsqu'un couple défini s'exerce entre la première partie (1) de la conduite de liquide et l'élément d'accouplement (2).

11. Élément d'accouplement selon la revendication 9, **caractérisé en ce que** la goupille de fixation (21) est pressée à l'aide d'un élément de rappel (24) dans le renfoncement (22), et lorsqu'un couple défini s'exerce entre la première partie (1) de la conduite de liquide et l'élément d'accouplement (2), est désencliquetée hors du renfoncement (22) par le biais d'une surface oblique (26).

12. Élément d'accouplement selon l'une quelconque des revendications précédentes, **caractérisé en ce qu'**une rotation libre entre l'élément d'accouplement (2) et la deuxième partie (5) de la conduite de liquide est possible au niveau du deuxième raccord de liquide (4) de l'élément d'accouplement.

13. Élément d'accouplement selon l'une quelconque des revendications précédentes, **caractérisé en ce que** la fixation antirotation (9) peut être déconnectée et **en ce que** dans l'état déconnecté, une rotation relative libre entre l'élément d'accouplement (2) et la première partie (1) de la conduite de liquide est possible.

14. Pistolet de remplissage, **caractérisé en ce qu'**il présente un élément d'accouplement selon l'une quelconque des revendications 1 à 13, dans lequel, entre le pistolet de remplissage et le premier raccord de liquide (3) de l'élément d'accouplement (2) est réalisée une connexion vissée.

15. Distributeur de carburant, **caractérisé en ce qu'**il présente un pistolet de remplissage selon la revendication 14.
